# EUROPEAN PATENT APPLICATION

(11) **EP 4 030 793 A2**
(43) Date of publication of application: **20.07.2022**
(21) Application number: 22169322.9
(22) Date of filing: 21.04.2022
(51) Int. Cl.: H04W 4/40, H04W 4/12, H04W 4/02

(54) **VEHICLE-BASED INTERACTION METHOD AND APPARATUS, DEVICE, MEDIUM AND VEHICLE**

(30) Priority: 07.05.2021 CN 202110495987
(71) Applicant: Apollo Intelligent Connectivity (Beijing) Technology Co., Ltd., Beijing 100176 (CN)
(72) Inventor: ZHOU, Guohui, BEIJING, 100176 (CN)
(74) Representative: Regimbeau

(57) **Abstract**

Provided are a vehicle-based interaction method and apparatus, a device, a medium and a vehicle, relating to the field of data processing technology and further relating to the intelligent in-vehicle infotainment technology and the vehicle-to-everything technology. The method includes acquiring (S110, S230) vehicle interaction indication information triggered by an external vehicle-approaching object; performing (S120, S240) interaction type recognition of the vehicle interaction indication information to obtain an interaction type recognition result; and in response to determining that the interaction type recognition result is a target interaction type, sending (S130, S250) vehicle interaction information to an associated vehicle user. The interaction function of a vehicle is enriched. Usage scenarios of interaction of an intelligent vehicle are expanded.

## Description

### TECHNICAL FIELD

The present disclosure relates to the field of data processing technology and, in particular, to the intelligent in-vehicle infotainment technology and the vehicle-to-everything technology.

### BACKGROUND

With the development of the intelligent in-vehicle infotainment technology and the vehicle-to-everything technology, the function of human-computer interaction of a vehicle has received more and more attention from a user. Human-computer interaction refers to a human-computer information exchange process in which a human and a computer use a certain dialogue to accomplish a determined task in a certain interactive mode. Human-computer interaction of a vehicle is intended for interaction between a person and a vehicle. How to enrich the function of human-computer interaction of a vehicle is significant for improving the intelligence of the in-vehicle infotainment of the vehicle and the user experience of the vehicle.

### SUMMARY

Embodiments of the present disclosure provide a vehicle-based interaction method and apparatus, a device, a medium and a vehicle, enriching the interaction function of a vehicle and expanding usage scenarios of interaction of an intelligent vehicle.

In a first aspect, an embodiment of the present disclosure provides a vehicle-based interaction method.

The method includes acquiring vehicle interaction indication information triggered by an external vehicle-approaching object; performing interaction type recognition of the vehicle interaction indication information to obtain an interaction type recognition result; and in response to determining that the interaction type recognition result is a target interaction type, sending vehicle interaction information to an associated vehicle user.

In a second aspect, an embodiment of the present disclosure provides a vehicle-based interaction apparatus. The apparatus includes a vehicle interaction indication information acquisition module, an interaction type recognition result acquisition module and a vehicle interaction information sending module.

The vehicle interaction indication information acquisition module is configured to acquire vehicle interaction indication information triggered by an external vehicle-approaching obj ect.

The interaction type recognition result acquisition module is configured to perform interaction type recognition of the vehicle interaction indication information to obtain an interaction type recognition result.

The vehicle interaction information sending module is configured to, in response to determining that the interaction type recognition result is a target interaction type, send vehicle interaction information to an associated vehicle user.

In a third aspect, an embodiment of the present disclosure provides an electronic device. The electronic device includes at least one processor and a memory communicatively connected to the at least one processor. The memory stores instructions executable by the at least one processor to enable the at least one processor to perform the vehicle-based interaction method according to the embodiment of the first aspect.

In a fourth aspect, an embodiment of the present disclosure provides a non-transitory computer-readable storage medium. The storage medium stores computer instructions for causing a computer to perform the vehicle-based interaction method according to the embodiment of the first aspect.

In a fifth aspect, an embodiment of the present disclosure provides a computer program product. The computer program product includes a computer program which, when executed by a processor, causes the processor to perform the vehicle-based interaction method according to the embodiment of the first aspect.

In a sixth aspect, an embodiment of the present disclosure provides a vehicle. The vehicle includes a vehicle body and further includes the electronic device according to the third aspect, at least one vehicle radar disposed on the vehicle body, and a vehicle camera disposed outside the vehicle body.

In embodiments of the present disclosure, vehicle interaction indication information triggered by an external vehicle-approaching object is acquired; interaction type recognition of the vehicle interaction indication information is performed so that an interaction type recognition result is obtained; and then in response to determining that the interaction type recognition result is a target interaction type, vehicle interaction information is sent to an associated vehicle user. In this manner, problems such as imperfection of an existing vehicle interaction function are solved so that the interaction function of a vehicle is enriched and usage scenarios of interaction of an intelligent vehicle are expanded.

It is to be understood that the content described in this part is neither intended to identify key or important features of embodiments of the present disclosure nor intended to limit the scope of the present disclosure. Other features of the present disclosure are apparent from the description provided hereinafter.

### BRIEF DESCRIPTION OF DRAWINGS

The drawings are intended to provide a better understanding of the present disclosure and not to limit the present disclosure.
FIG. 1 is a flowchart of a vehicle-based interaction method according to an embodiment of the present disclosure.
FIG. 2 is a flowchart of a vehicle-based interaction method according to an embodiment of the present disclosure.
FIG. 3 is a diagram illustrating the structure of a vehicle-based interaction system according to an embodiment of the present disclosure.
FIG. 4 is a diagram illustrating the structure of a vehicle-based interaction apparatus according to an embodiment of the present disclosure.
FIG. 5 is a diagram illustrating the structure of an electronic device for performing a vehicle-based interaction method according to an embodiment of the present disclosure.

### DETAILED DESCRIPTION

Example embodiments of the present disclosure, including details of embodiments of the present disclosure, are described hereinafter in conjunction with the drawings to facilitate understanding. The example embodiments are illustrative only. Therefore, it is to be understood by those of ordinary skill in the art that various changes and modifications may be made to the embodiments described herein without departing from the scope of the present disclosure. Similarly, description of well-known functions and structures is omitted hereinafter for clarity and conciseness.

With the popularization of vehicles, especially the gradual introduction of intelligent vehicles into people's lives, intelligent interaction is beginning to be recognized by people. In some scenarios, when the outside needs but fails to contact the owner of a vehicle in time to solve a trouble after the owner locks the vehicle and leaves, the outside tends to solve the trouble violently, causing damage to the vehicle. A typical scenario is that after the owner of a vehicle locks the vehicle and leaves, the vehicle blocks the path of another vehicle, and the owner of the blocked vehicle wants but fails to get any effective contact information of the owner of the locked vehicle, failing to move away the vehicle. In extreme cases, the blocked vehicle crashes into the locked vehicle and leaves, resulting in the loss of the owner's property. Another typical scenario is a rescue alarm. For example, after the owner of a vehicle locks an infant in the vehicle and leaves, another person finds that the life of the infant is in danger but fails to get any effective contact information of the owner. As a result, this person has to break the window to rescue the infant, resulting in the loss of the owner's property.

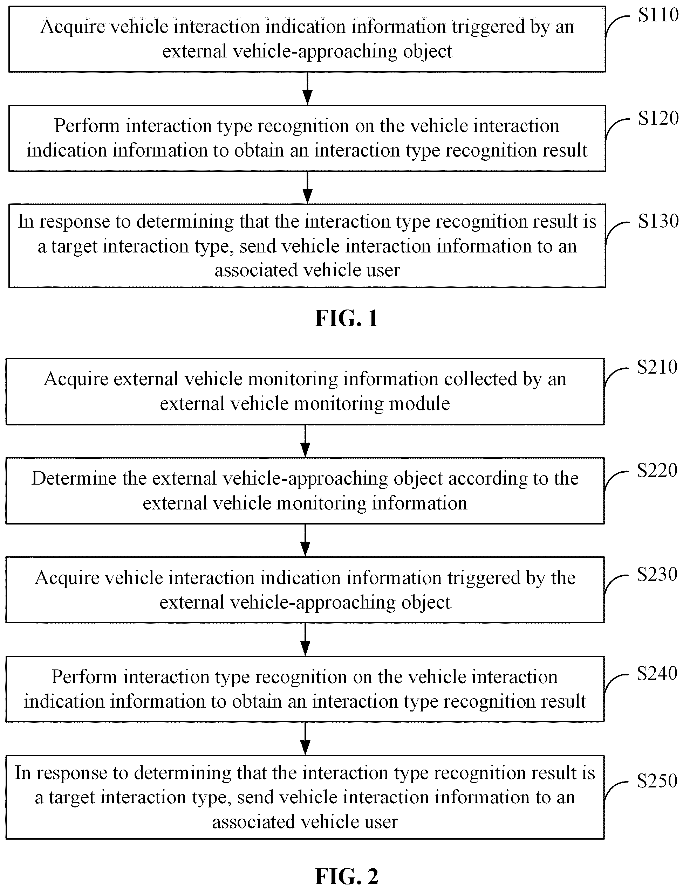

In one example, FIG. 1 is a flowchart of a vehicle-based interaction method according to an embodiment of the present disclosure. This embodiment is applicable to the case where an object outside a vehicle remotely interacts with an associated vehicle user through the vehicle. The method may be performed by a vehicle-based interaction apparatus. The apparatus may be implemented as software and/or hardware and may generally be integrated in an electronic device. The electronic device may be an in-vehicle terminal device. Accordingly, as shown in FIG. 1, the method includes the operations below.

In S110, vehicle interaction indication information triggered by an external vehicle-approaching object is acquired.

The external vehicle-approaching object may be an object that is located outside the vehicle and that is approaching the vehicle, may be an external user or may be any object type of the object approaching the vehicle, for example, an external vehicle approaching the vehicle. The specific object type of the external vehicle-approaching object is not limited in this embodiment of the present disclosure. The vehicle interaction indication information may be used for indicating that the interaction with the vehicle is needed. The information type of the vehicle interaction indication information may be, for example, text, voice, image or video. The information type of the vehicle interaction indication information is not limited in this embodiment of the present disclosure.

In this embodiment of the present disclosure, when the external vehicle-approaching object is approaching the vehicle, the external vehicle-approaching object may trigger the vehicle interaction indication information through the vehicle. Accordingly, the vehicle may receive the vehicle interaction indication information triggered by the external vehicle-approaching object. For example, when the external vehicle-approaching object is an external vehicle approaching, the vehicle interaction indication information may be the approach information of the external vehicle collected by the vehicle. For example, upon detecting that the external vehicle A is 1 m away from the vehicle, the vehicle may use the alarm text "an external obstacle is within the crash range of the vehicle" as the vehicle interaction indication information. Alternatively, when the external vehicle-approaching object is an external user approaching, the vehicle interaction indication information may be information input to the vehicle by the external user, for example, instruction information in the form of voice or image input to the vehicle by the external user. That is, the vehicle interaction indication information may be set according to the type of the external vehicle-approaching object and specific interaction requirements. The specific type and content of the vehicle interaction indication information are not limited in this embodiment of the present disclosure.

It is to be noted that the vehicle may be externally provided with a voice collection apparatus for collecting external voice information, such as a microphone, to collect the vehicle interactive indication information in the form of voice.

Optionally, the vehicle performing the vehicle-based interaction method may be a locked vehicle or may be an unlocked vehicle with no person inside the vehicle. The type of the vehicle performing the vehicle-based interaction method is not limited in this embodiment of the present disclosure. It is to be understood that the vehicle may specifically perform the vehicle-based interaction method through an in-vehicle system.

In S120, interaction type recognition is performed on the vehicle interaction indication information so that an interaction type recognition result is obtained.

The interaction type recognition result may be a result obtained by interaction type recognition performed on the vehicle interaction indication information by the vehicle.

Accordingly, after receiving the vehicle interaction indication information, the vehicle may perform the interaction type recognition on the vehicle interaction indication information to confirm the interaction type recognition result of the vehicle interaction indication information.

It is to be understood that the mode of interaction type recognition performed on the vehicle interaction indication information varies with the type of the vehicle interaction indication information. For example, when the vehicle interaction indication information is text information, the vehicle may recognize the text to obtain the implication of the vehicle interaction indication information. For example, assuming that the vehicle interaction indication information is the alarm text "an external obstacle is within the crash range of the vehicle", then the interaction type recognition result of the vehicle interaction indication information may be "an obstacle is approaching closely and an emergency safety measure is necessary". When the vehicle interaction indication information is voice information, the vehicle may perform voice recognition on the voice information to obtain the intent of the external user; and generate a voice instruction corresponding to the vehicle interaction indication information. For example, assuming that the vehicle interaction indication information is the voice information "I need to contact the owner of the vehicle" input to the vehicle by the external user, then the interaction type recognition result of the vehicle interaction indication information may be "an external user requests to contact the owner of the vehicle". Alternatively, when the vehicle interaction indication information is image information or video information, the vehicle may perform image recognition on the image information or video information to obtain the intent of the external user; and use the implication of the image recognition result as the vehicle interaction indication information. For example, assuming that the vehicle interaction indication information is a gesture input to the vehicle by the external user and assuming that the instruction corresponding to the gesture is preset for the vehicle as "contact the owner of the vehicle", then the interaction type recognition result of the vehicle interaction indication information may be "an external user requests to contact the owner of the vehicle".

In S130, in response to determining that the interaction type recognition result is a target interaction type, vehicle interaction information is sent to an associated vehicle user.

The target interaction type may represent the type of interaction that needs to be performed with the associated vehicle user. The associated vehicle user may be a user having control over the vehicle, for example, the owner of the vehicle or a contact designated by the owner of the vehicle. The specific user type of the associated vehicle user is not limited in this embodiment of the present disclosure. The vehicle interaction information may be information indicating to the associated vehicle user that the outside requests for interaction. The type of the vehicle interaction information may be, for example, text, voice, image or video. The specific information type of the vehicle interaction information is not limited in this embodiment of the present disclosure.

Accordingly, if the vehicle determines that the interaction type recognition result is the target interaction type, the vehicle interaction information may be sent to the associated vehicle user.

For example, if the vehicle determines that the interaction type recognition result is "an external user requests to contact the owner of the vehicle", representing that the outside requests, through the vehicle, to interact with the associated vehicle user, the interaction type recognition result may be determined to be the target interaction type.

Accordingly, the vehicle interaction information sent to the associated vehicle user may be of various information types. For example, the vehicle may send the vehicle interaction information preset in the form of text by the system to the associated vehicle user by use of a message or a notification. Alternatively, the vehicle may collect external video data in real time and upload the video data to a cloud. The cloud may send an information reminder to remind the associated vehicle user about the vehicle interaction information sent; and use the video data collected by the vehicle as the interaction information and provide the interaction information for the associated vehicle user.

This shows that in the scenario where an external vehicle obstacle approaches the vehicle and is likely to crash into the vehicle, the vehicle may automatically generate the vehicle interaction indication information according to the approach situation of the external obstacle; and then send the vehicle interaction information to the associated vehicle user according to the vehicle interaction indication information. At this time, the associated vehicle user can grasp the approach situation of the external obstacle. For example, the associated vehicle user may observe the situation around the vehicle by using the external video data acquired by the vehicle so that the associated vehicle user can remotely control the vehicle to take an emergency safety measure. Alternatively, the associated vehicle user may send an alarm message to the approaching obstacle through the vehicle, reminding the obstacle that the surrounding situation is monitored. Alternatively, the associated vehicle user may reach the parking site to cope. That is, the associated vehicle user may make a corresponding feedback according to the vehicle interaction information. In the scenario where the external user needs to contact the associated vehicle user in time, for example, the scenario where the vehicle needs to be moved away or the scenario where an infant inside the vehicle is in danger, the external user may input the vehicle interaction indication information to the vehicle, and the vehicle may send the vehicle interaction information to the associated vehicle user according to the vehicle interaction indication information. At this time, the associated vehicle user may know that the external user requests for interaction and may grasp the situation around or in the vehicle in real time. For example, the associated vehicle user may observe the situation around and inside the vehicle by using the external and internal video data acquired by the vehicle and may quickly control the vehicle to unlock if it is determined that an infant is left in the vehicle and the life of the infant is in danger. If it is determined that the vehicle needs to be moved away, the associated vehicle user may remotely control the vehicle to move. Alternatively, the associated vehicle user may reach the parking site to cope. That is, the associated vehicle user may make a corresponding feedback according to the vehicle interaction information.

In conclusion, the vehicle-based interaction method according to this embodiment of the present disclosure enables the external vehicle-approaching object and the associated vehicle user to interact with each other through the vehicle, thereby further improving the intelligence of the vehicle, increasing the convenience of application of the vehicle safety protection, enriching the interaction function of a vehicle and expanding the usage scenarios of interaction of an intelligent vehicle.

In this embodiment of the present disclosure, vehicle interaction indication information triggered by an external vehicle-approaching object is acquired; interaction type recognition of the vehicle interaction indication information is performed so that an interaction type recognition result is obtained; and then in response to determining that the interaction type recognition result is a target interaction type, vehicle interaction information is sent to an associated vehicle user. In this manner, problems such as imperfection of an existing vehicle interaction function are solved so that the interaction function of a vehicle is enriched and usage scenarios of interaction of an intelligent vehicle are expanded.

In one example, FIG. 2 is a flowchart of a vehicle-based interaction method according to an embodiment of the present disclosure. This embodiment of the present disclosure is an improvement on the scheme of the previous embodiment. This embodiment of the present disclosure includes multiple optional implementations in which vehicle interaction indication information triggered by an external vehicle-approaching object is acquired and vehicle interaction information is sent to an associated vehicle user.

As shown in FIG. 2, the vehicle-based interaction method includes the operations below.

In S210, external vehicle monitoring information collected by an external vehicle monitoring module is acquired.

The external vehicle monitoring module may include, but is not limited to, a vehicle radar and/or a vehicle camera. The external vehicle monitoring module may be any module that can acquire external monitoring information. The specific type of the external vehicle monitoring module is not limited in this embodiment of the present disclosure. Optionally, the vehicle radar may be an ultrasonic radar, and the vehicle camera may be disposed outside the vehicle to acquire an image or a video outside the vehicle. The external vehicle monitoring information may be monitoring information outside the vehicle, may be information detected by the vehicle radar or may be external image or video information acquired by the vehicle camera. This is not limited in this embodiment of the present disclosure.

In this embodiment of the present disclosure, the vehicle may collect the external vehicle monitoring information through the external vehicle monitoring module to monitor the outside of the vehicle in real time.

Optionally, the vehicle may monitor the inside of the vehicle through an internal vehicle monitoring module (for example, an internal vehicle camera) to timely remind the associated vehicle user to cope when it is determined that an abnormal condition occurs in the vehicle, for example, an infant is left in the vehicle or a suspicious-looking character appears.

In S220, the external vehicle-approaching object is determined according to the external vehicle monitoring information.

Accordingly, the vehicle may determine the external vehicle-approaching object according to the external vehicle monitoring information. Specifically, upon determining, by using the external vehicle monitoring information, that an obstacle is within a preset range of the vehicle, the vehicle may determine that an external vehicle-approaching object is outside the vehicle.

In this scheme, the external vehicle-approaching object is determined according to the external vehicle monitoring information collected by the vehicle so that when uncontrolled (for example, locked), the vehicle automatically determines the external vehicle-approaching object and automatically triggers the vehicle-based interaction function according to the external vehicle-approaching object.

In an optional embodiment of the present disclosure, acquiring the external vehicle monitoring information collected by the external vehicle monitoring module may include acquiring first external vehicle monitoring information collected by the vehicle radar within a first preset range; and/or acquiring second external vehicle monitoring information collected by the vehicle camera within a second preset range.

The first preset range and the second preset range may be set according to actual requirements. For example, the first preset range may be 10 m, and the second preset range may be 5 m. The specific value of the first preset range and the specific value of the second preset range are not limited in this embodiment of the present disclosure. Optionally, the first preset range may be greater than the second preset range. The first external vehicle monitoring information may be radar monitoring information collected by the vehicle radar. The second external vehicle monitoring information may be image information or video information collected by the vehicle camera.

In an optional embodiment of the present disclosure, acquiring the second external vehicle monitoring information collected by the vehicle camera within the second preset range may include, in response to determining that the external vehicle-approaching object is within the second preset range, acquiring external object image data of the external vehicle-approaching object, where the external object image data is collected by the vehicle camera in real time; and, in response to determining that the external vehicle-approaching object is within a vehicle interaction range, performing image recognition on the external object image data.

The vehicle interaction range may be a range in which image recognition is performed on the collected image data by the camera. Specifically, the vehicle interaction range may be set according to actual requirements and is not limited in this embodiment of the present disclosure. The external object image data may be activity data of the external vehicle-approaching object collected by the vehicle camera. It is to be understood that when the external vehicle-approaching object is within the monitoring range of the camera, the external object image data may include the specific activity information of the external vehicle-approaching object. When the external vehicle-approaching object is outside the monitoring range of the camera, the external object image data does not include the activity information of the external vehicle-approaching object. Generally, multiple cameras may be disposed outside the vehicle. Each camera may collect image data at a different angle of the vehicle. Image data collected by all of the cameras may cover a range of all angles around the vehicle. Therefore, usually external object image data collected by at least one vehicle camera includes the activity information of the external vehicle-approaching object.

In this embodiment of the present disclosure, optionally, the vehicle radar may collect the first external vehicle monitoring information within the first preset range, and the vehicle camera may collect the second external vehicle monitoring information within the second preset range. In the process of collecting the second external vehicle monitoring information within the second preset range by using the vehicle camera, if the vehicle determines that the external vehicle-approaching object is within the second preset range but outside the vehicle interaction range, the vehicle camera may collect and save the external object image data of the external vehicle-approaching object in real time. If the vehicle determines that the external vehicle-approaching object is within the vehicle interaction range, the vehicle may control the vehicle camera to continue collecting the external object image data and perform image recognition on the external object image data collected by the vehicle camera so as to determine the activity content of the external vehicle-approaching object, for example, an activity tendency of the external vehicle-approaching object to crash into the vehicle or a gesture made to the vehicle camera by the external vehicle-approaching object.

In one specific example, after the owner of the vehicle locks the vehicle and leaves, the ultrasonic radar detection function of the vehicle is steady on so that the ultrasonic radar of the vehicle detects, within the first preset range, the external vehicle-approaching object approaching the vehicle, for example, another vehicle approaching or a pedestrian approaching. Optionally, the ultrasonic radar may feed back different alarm signals to the in-vehicle host according to different distances between the external vehicle-approaching object and the vehicle. For example, the ultrasonic radar triggers a level-1 alarm if the external vehicle-approaching object is within 5 meters from the vehicle and triggers a level-2 alarm if the external vehicle-approaching object is within 1 meter from the vehicle. Optionally, when the ultrasonic radar triggers the level-1 alarm, it may be determined that the external vehicle-approaching object is within the second preset range. At this time, the vehicle may turn on the vehicle camera to collect the external object image data of the external vehicle-approaching object within the second preset range, and use the external object image data collected within the second preset range as the second external vehicle monitoring information. When the ultrasonic radar triggers the level-2 alarm, it may be determined that the external vehicle-approaching object is within the vehicle interaction range. At this time, the vehicle may perform image recognition on the external object image data collected by the vehicle camera and save the image recognition result. To further improve the vehicle safety precautions, when the vehicle determines that the external vehicle-approaching object is within the vehicle interaction range, the vehicle may also control the vehicle lamps to flash regularly to remind the external vehicle-approaching object that the external vehicle information is monitored.

The vehicle radar has extremely low power consumption. Thus, the collection of the external vehicle monitoring information by the vehicle radar does not consume too much power even if the vehicle is locked. The vehicle radar can only detect the external vehicle-approaching object but cannot recognize the type of the external vehicle-approaching object. Thus, when the vehicle radar determines that the external vehicle-approaching object is too close to the vehicle, the camera may collect the activity information of the external vehicle-approaching object so that the activity state of the external vehicle-approaching object can be accurately acquired by using the information collected by the camera. It can be seen that the method of collecting the external vehicle monitoring information by using both the vehicle radar and the vehicle camera satisfies both the requirement for low power consumption of the vehicle and the requirement for collecting the external vehicle monitoring information.

Meanwhile, when the external vehicle-approaching object is within the second preset range, only the vehicle camera collects the external object image data. An external user usually triggers the vehicle interaction indication information near the vehicle, for example, sending a voice instruction or making a gesture. Thus, only when the vehicle determines that the external vehicle-approaching object is within the vehicle interaction range, does the vehicle enable the image recognition function to acquire the vehicle interaction indication information, thereby further reducing the power consumption of the vehicle.

In S230, vehicle interaction indication information triggered by the external vehicle-approaching object is acquired.

In an optional embodiment of the present disclosure, acquiring the vehicle interaction indication information triggered by the external vehicle-approaching object may include, in response to determining that the external vehicle-approaching object is a first external vehicle-approaching object and that the first external vehicle-approaching object is within the vehicle interaction range, acquiring the approach vehicle distance of the first external vehicle-approaching object in real time; and generating the vehicle interaction indication information according to the approach vehicle distance.

The first external vehicle-approaching object may be an object other than the external user, such as a vehicle, an animal or another obstacle. The approach vehicle distance may be the distance between the first external vehicle-approaching object and the vehicle.

Optionally, when the vehicle determines that the external vehicle-approaching object is the first external vehicle-approaching object and determines that the first external vehicle-approaching object is within the vehicle interaction range, the vehicle may acquire the approach vehicle distance of the first external vehicle-approaching object in real time by using the vehicle radar and generate the vehicle interaction indication information according to the approach vehicle distance. For example, when the approach vehicle distance is less than 1 meter, the generated vehicle interaction indication information may be "an external obstacle is within the crash range of the vehicle", and when the approach vehicle distance is a negative value, the generated vehicle interaction indication information may be "an external obstacle has crashed into the vehicle".

In this scheme, the vehicle interaction indication information is generated by using the approach vehicle distance so that the associated vehicle user can grasp the approach vehicle state of the first external vehicle-approaching object in real time.

In an optional embodiment of the present disclosure, acquiring the vehicle interaction indication information triggered by the external vehicle-approaching object may include, in response to determining that the external vehicle-approaching object is a second external vehicle-approaching object and that the second external vehicle-approaching object is within the vehicle interaction range, acquiring object interaction intent instruction information input by the second external vehicle-approaching object according to vehicle interaction guidance information; and determining the object interaction intent instruction information to be the vehicle interaction indication information. The object interaction intent instruction information includes gesture information and/or voice instruction information.

The second external vehicle-approaching object may be the external user. The vehicle interaction guidance information may be information that guides the external user in inputting the vehicle interaction indication information. The information type of the vehicle interaction guidance information may be, for example, text, voice, image or video and is not limited in this embodiment of the present disclosure. The object interaction intent instruction information may be information input by the second external vehicle-approaching object according to the vehicle interaction guidance information.

Optionally, when the vehicle determines that the external vehicle-approaching object is the second external vehicle-approaching object and determines that the second external vehicle-approaching object is within the vehicle interaction range, the second external vehicle-approaching object, that is, the external user may acquire the vehicle interaction guidance information through the vehicle. For example, the associated vehicle user may affix an alarm sign to the front window of the vehicle. The alarm sign may say "Please stand 1 meter directly in front of the vehicle, with a gesture of thumbs up with your left hand and a gesture of OK with your right hand. Upon correct recognition, the vehicle lamps flash twice to indicate to the operator that a message has been sent to tell the owner of the vehicle to move away the vehicle as soon as possible." The words in the alarm sign serve as the vehicle interaction guidance information. Alternatively, the vehicle may show the vehicle interaction guidance information to the external user by voice broadcasting or by audio/video. This is not limited in this embodiment of the present disclosure. Accordingly, the external user may input the object interaction intent instruction information to the vehicle according to the vehicle interaction guidance information. For example, the external user may make the corresponding gesture or input related voice instruction information according to the vehicle interaction guidance information. At this time, the vehicle may acquire the object interaction intent instruction information and determine the object interaction intent instruction information to be the vehicle interaction indication information.

In this scheme, the second external vehicle-approaching object is guided by the vehicle interaction guidance information to trigger the vehicle interaction indication information. In this manner, the external user notifies an external interaction requirement to the associated vehicle user through the vehicle so that the associated vehicle user can acquire the external interaction requirement in real time.

In S240, interaction type recognition is performed on the vehicle interaction indication information so that an interaction type recognition result is obtained.

It is to be understood that in some scenarios, when the external vehicle-approaching object is an external user, the vehicle interaction indication information triggered by the external user may be inaccurate. For example, when the vehicle guides the external user through the vehicle interaction guidance information to make a preset gesture, but the gesture made by the external user does not match the preset gesture, it is determined that the interaction type recognition result is not a target interaction type. At this time, the vehicle interaction function cannot be triggered.

In S250, in response to determining that the interaction type recognition result is a target interaction type, vehicle interaction information is sent to an associated vehicle user.

In an optional embodiment of the present disclosure, sending the vehicle interaction information to the associated vehicle user may include acquiring preset vehicle interaction information and sending the preset vehicle interaction information to the associated vehicle user; and/or acquiring vehicle monitoring information, uploading the vehicle monitoring information to a cloud and sending the vehicle monitoring information to the associated vehicle user through the cloud. The vehicle monitoring information includes internal vehicle monitoring information and/or external vehicle monitoring information.

The preset vehicle interaction information may be vehicle interaction information preset in the in-vehicle system. The vehicle monitoring information may be internal or external monitoring information acquired by the vehicle.

In this embodiment of the present disclosure, the vehicle interaction information may be sent to the associated vehicle user in a variety of optional manners. For example, the vehicle may acquire the preset vehicle interaction information stored in the system and send the preset vehicle interaction information to the associated vehicle user. For example, the preset vehicle interaction information may be "an obstacle is approaching the vehicle closely and an emergency safety measure is necessary" or "an external user requests to contact the owner of the vehicle". The vehicle may also acquire the vehicle monitoring information such as the internal vehicle monitoring information and/or the external vehicle monitoring information and upload the vehicle monitoring information to the cloud. The cloud may use the vehicle monitoring information as the vehicle interaction information and send the vehicle monitoring information to the associated vehicle user.

In this scheme, the vehicle interaction information is sent to the associated vehicle user in a variety of optional manners, thereby enriching the manners of sending the vehicle interaction information.

In an optional embodiment of the present disclosure, the vehicle-based interaction method may further include, in response to determining, according to the interaction type recognition result, that the external vehicle-approaching object is the second external vehicle-approaching object, acquiring the object identity of the second external vehicle-approaching object; receiving an interaction shielding instruction sent by the associated vehicle user according to the object identity; and rejecting, according to the interaction shielding instruction, acquisition of vehicle interaction indication information triggered by a target second external vehicle-approaching object.

The object identity may be used for identifying the identity of the second external vehicle-approaching object, that is, the external user. The interaction shielding instruction may be an instruction for instructing the vehicle not to receive the vehicle interaction indication information triggered the second external vehicle-approaching object. The target second external vehicle-approaching object may be a second external vehicle-approaching object designated by the associated vehicle user.

Some external users may harass the associated vehicle user by using the vehicle-based interaction method. Thus, to protect the privacy of the associated vehicle user, a corresponding object identity may be configured for each external user to uniquely identify the external user its own. For example, the corresponding object identity may be determined by using the face recognition result of the external user its own. If an external user behaves improperly, the associated vehicle user may set an interaction shielding instruction directed at the object identity of this external user and the interaction shielding instruction is sent to the vehicle to instruct the vehicle not to accept the vehicle interaction indication information triggered by this external user. After receiving the interaction shielding instruction, the vehicle may determine the target second external vehicle-approaching object, that is, the target external user, according to the interaction shielding instruction, thereby rejecting acquisition of the vehicle interaction indication information triggered by the target second external vehicle-approaching object. In this manner, the target second external vehicle-approaching object cannot interact with the associated vehicle user through the vehicle. Alternatively, the associated vehicle user may disable the vehicle-based interaction function.

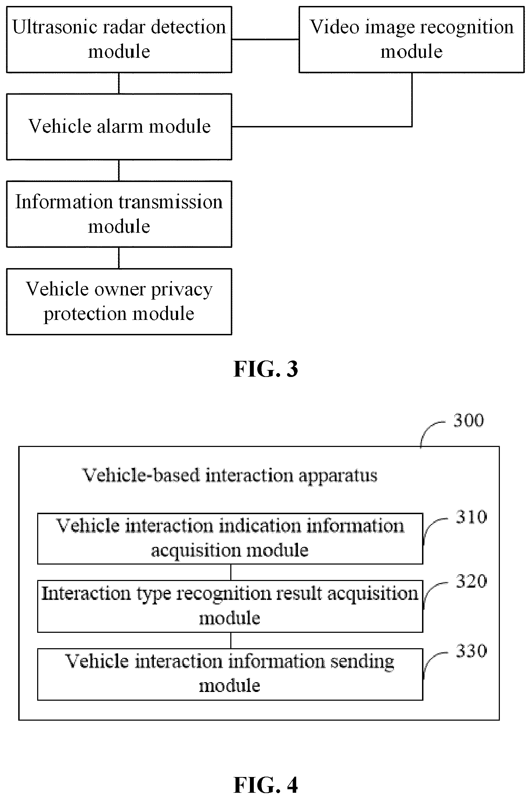

FIG. 3 is a diagram illustrating the structure of a vehicle-based interaction system according to an embodiment of the present disclosure. In one specific example, as shown in FIG. 3, the vehicle-based interaction system of a vehicle may proactively interact with the owner of the vehicle in an emergency. The vehicle-based interaction system may include multiple types of function modules such as an ultrasonic radar detection module, a video image recognition module, a vehicle alarm module, an information transmission module and a vehicle owner privacy protection module to fully satisfy the requirement for vehicle property security of the owner of the vehicle after the owner locks the vehicle and leaves.

The ultrasonic radar detection function is used for detecting an obstacle approaching the vehicle, for example, another vehicle approaching or a pedestrian approaching, after the owner of the vehicle locks the vehicle and leaves. The ultrasonic radar detection module is configured to detect an obstacle and feed back different alarm signals to the in-vehicle host according to different distances between the obstacle and the vehicle. For example, a level-1 alarm is triggered if the obstacle is within 5 meters from the vehicle, and a level-2 alarm is triggered if the obstacle is within 1 meter from the vehicle.

The vehicle alarm module is configured to perform processing according to different alarm levels. In response to the level-1 alarm, an in-vehicle camera wakes up and performs recognition and recording. In response to the level-2 alarm, images recorded in a video are recognized and saved. Meanwhile, the vehicle lamps flash to indicate to the pedestrian that the vehicle is performing monitoring.

The image recognition module is mainly configured to recognize the gesture of the pedestrian. For example, an alarm sign is affixed to the front window of the vehicle. The alarm sign may say "Please stand 1 meter directly in front of the vehicle, with a gesture of thumbs up with your left hand and a gesture of OK with your right hand. Upon correct recognition, the vehicle lamps flash twice to indicate to the operator that a message has been sent to tell the owner of the vehicle to move away the vehicle as soon as possible.", the pedestrian notifies the owner according to the guidance.

The information transmission module is configured to alarm the owner of the vehicle mainly by using a message or in other manners, for example, that the vehicle needs to be moved away because another vehicle needs to leave or that an infant inside the vehicle is in danger. The information transmission module is further configured to upload the video data to a cloud so that the owner of the vehicle may observe the situation around or inside the vehicle by using the video data and give a corresponding feedback.

The privacy protection module is mainly configured to protect the privacy of the owner of the vehicle. If a pedestrian harasses the owner by using this function, the owner may disable this function or may use the image recognition technology to recognize a person to be shielded. The harasser can no longer trigger this function by a gesture after the harasser is shielded.

In this scheme, vehicle interaction indication information triggered by an external vehicle-approaching object is acquired by a vehicle radar and/or a vehicle camera so that indirect interaction with an associated vehicle user is achieved according to the vehicle interaction indication information. In this manner, the problem of privacy disclosure such as phone number disclosure brought about by a traditional method is avoided. Moreover, the interaction function of a vehicle is enriched, and the usage scenarios of interaction of an intelligent vehicle are expanded.

In the schemes of the present disclosure, the acquisition, storage and application of personal information (such as face information or voice information) of the involved users all comply with the provisions of relevant laws and regulations and do not violate the public order and good customs.

It is to be noted that any arrangement and combination of technical features in the preceding embodiments are also within the scope of the present disclosure.

In one example, FIG. 4 is a diagram illustrating the structure of a vehicle-based interaction apparatus according to an embodiment of the present disclosure. This embodiment of the present disclosure is applicable to the case where an object outside a vehicle remotely interacts with an associated vehicle user through the vehicle. The apparatus is implemented as software and/or hardware and specifically disposed in an electronic device. The electronic device may be an in-vehicle terminal device.

The vehicle-based interaction apparatus 300 as shown in FIG. 4 includes a vehicle interaction indication information acquisition module 310, an interaction type recognition result acquisition module 320 and a vehicle interaction information sending module 330.

The vehicle interaction indication information acquisition module 310 is configured to acquire vehicle interaction indication information triggered by an external vehicle-approaching obj ect.

The interaction type recognition result acquisition module 320 is configured to perform interaction type recognition on the vehicle interaction indication information to obtain an interaction type recognition result.

The vehicle interaction information sending module 330 is configured to, in response to determining that the interaction type recognition result is a target interaction type, send vehicle interaction information to an associated vehicle user.

In this embodiment of the present disclosure, vehicle interaction indication information triggered by an external vehicle-approaching object is acquired; interaction type recognition of the vehicle interaction indication information is performed so that an interaction type recognition result is obtained; and then in response to determining that the interaction type recognition result is a target interaction type, vehicle interaction information is sent to an associated vehicle user. In this manner, problems such as imperfection of an existing vehicle interaction function are solved so that the interaction function of a vehicle is enriched and usage scenarios of interaction of an intelligent vehicle are expanded.

Alternatively, the vehicle-based interaction apparatus may further include an external vehicle monitoring information acquisition module configured to acquire external vehicle monitoring information collected by an external vehicle monitoring module; and an external vehicle-approaching object determination module configured to determine the external vehicle-approaching object according to the external vehicle monitoring information. The external vehicle monitoring module includes a vehicle radar and/or a vehicle camera.

Optionally, the external vehicle monitoring information acquisition module is configured to acquire first external vehicle monitoring information collected by the vehicle radar within a first preset range; and/or acquire second external vehicle monitoring information collected by the vehicle camera within a second preset range.

Optionally, the external vehicle monitoring information acquisition module is configured to, in response to determining that the external vehicle-approaching object is within the second preset range, acquire external object image data of the external vehicle-approaching object, where the external object image data is collected by the vehicle camera in real time; and, in response to determining that the external vehicle-approaching object is within a vehicle interaction range, perform image recognition on the external object image data.

Optionally, the vehicle interaction indication information acquisition module 310 is configured to, in response to determining that the external vehicle-approaching object is a first external vehicle-approaching object and that the first external vehicle-approaching object is within a vehicle interaction range, acquire the approach vehicle distance of the first external vehicle-approaching object in real time; and generate the vehicle interaction indication information according to the approach vehicle distance.

Optionally, the vehicle interaction indication information acquisition module 310 is configured to, in response to determining that the external vehicle-approaching object is a second external vehicle-approaching object and that the second external vehicle-approaching object is within a vehicle interaction range, acquire object interaction intent instruction information input by the second external vehicle-approaching object according to vehicle interaction guidance information; and determine the object interaction intent instruction information to be the vehicle interaction indication information. The object interaction intent instruction information includes gesture information and/or voice instruction information.

Optionally, the vehicle interaction information sending module 330 is configured to acquire preset vehicle interaction information and send the preset vehicle interaction information to the associated vehicle user; and/or acquire vehicle monitoring information, upload the vehicle monitoring information to a cloud and send the vehicle monitoring information to the associated vehicle user through the cloud. The vehicle monitoring information includes internal vehicle monitoring information and/or external vehicle monitoring information.

Alternatively, the vehicle-based interaction apparatus may further include an object identity acquisition module configured to, in response to determining, according to the interaction type recognition result, that the external vehicle-approaching object is a second external vehicle-approaching object, acquire the object identity of the second external vehicle-approaching object; an interaction shielding instruction receiving module configured to receive an interaction shielding instruction sent by the associated vehicle user according to the object identity; and a vehicle interaction indication information acquisition rejection module configured to reject, according to the interaction shielding instruction, acquisition of vehicle interaction indication information triggered by a target second external vehicle-approaching obj ect.

The vehicle-based interaction apparatus may perform the vehicle-based interaction method according to any embodiment of the present disclosure and has function modules and beneficial effects corresponding to the performed method. For technical details not described in detail in this embodiment, see the vehicle-based interaction method according to any embodiment of the present disclosure.

The vehicle-based interaction apparatus may perform the vehicle-based interaction method according to any embodiment of the present disclosure. For this reason, based on the vehicle-based interaction method according to any embodiment of the present disclosure, those skilled in the art can understand implementations of the vehicle-based interaction apparatus according to this embodiment and variations of these implementations. Therefore, no detailed description is given of how the vehicle-based interaction apparatus performs the vehicle-based interaction method according to any embodiment of the present disclosure. Any apparatus used by those skilled in the art to perform the vehicle-based interaction method according to any embodiment of the present disclosure is within the scope of the present disclosure.

In one example, the present disclosure further provides an electronic device, a readable storage medium and a computer program product.

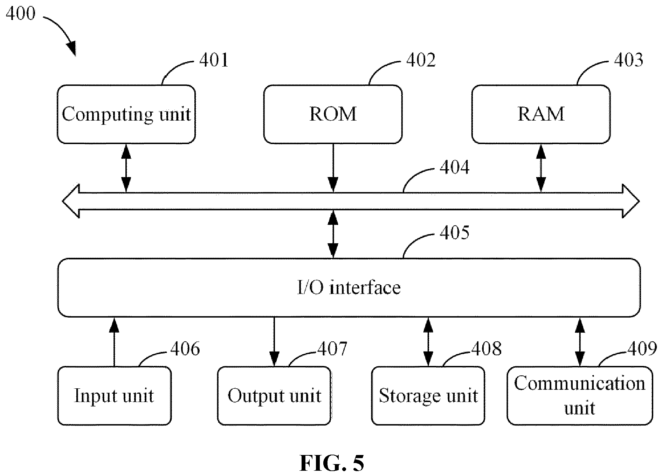

FIG. 5 is a block diagram illustrating the structure of an example electronic device for performing embodiments of the present disclosure. Electronic devices are intended to represent various forms of digital computers, for example, laptop computers, desktop computers, worktables, personal digital assistants, servers, blade servers, mainframe computers and other applicable computers. Electronic devices may also represent various forms of mobile devices, for example, personal digital assistants, cellphones, smartphones, wearable devices and other similar computing devices. Herein the shown components, the connections and relationships between these components, and the functions of these components are illustrative only and are not intended to limit the implementation of the present disclosure as described and/or claimed herein.

As shown in FIG. 5, the device 400 includes a computing unit 401. The computing unit 401 is capable of performing various appropriate actions and processing according to a computer program stored in a read-only memory (ROM) 402 or a computer program loaded into a random-access memory (RAM) 403 from a storage unit 408. The RAM 403 can also store various programs and data required for operations of the device 400. The calculation unit 401, the ROM 402 and the RAM 403 are connected to each other by a bus 404. An input/output (I/O) interface 405 is also connected to the bus 404.

Multiple components in the device 400 are connected to the I/O interface 405. The multiple components include an input unit 406 such as a keyboard or a mouse; an output unit 407 such as a display or a speaker; a storage unit 408 such as a magnetic disk or an optical disk; and a communication unit 409 such as a network card, a modem or a wireless communication transceiver. The communication unit 409 allows the device 400 to exchange information/data with other devices over a computer network such as the Internet and/or over various telecommunication networks.

The computing unit 401 may be a general-purpose and/or special-purpose processing component having processing and computing capabilities. Examples of the computing unit 401 include, but are not limited to, a central processing unit (CPU), a graphics processing unit (GPU), a special-purpose artificial intelligence (AI) computing chip, a computing unit executing machine learning model algorithms, a digital signal processor (DSP), and any appropriate processor, controller and microcontroller. The computing unit 401 is configured to perform various preceding methods and processing, for example, a vehicle-based interaction method. For example, in some embodiments, the vehicle-based interaction method may be implemented as a computer software program tangibly contained in a machine-readable medium, for example, the storage unit 408. In some embodiments, part or all of computer programs can be loaded and/or installed on the device 400 via the ROM 402 and/or the communication unit 409. When the computer program is loaded into the RAM 403 and executed by the computing unit 401, one or more steps of the vehicle-based interaction method can be performed. Alternatively, in other embodiments, the computing unit 401 may be configured to perform the vehicle-based interaction method in any other appropriate manner (for example, by use of firmware).

The preceding various embodiments of systems and techniques may be implemented in digital electronic circuitry, integrated circuitry, a field-programmable gate array (FPGA), an application-specific integrated circuit (ASIC), an application-specific standard product (ASSP), a system on a chip (SoC), a complex programmable logic device (CPLD), computer hardware, firmware, software and/or any combination thereof. The various embodiments may include implementations in one or more computer programs. The one or more computer programs are executable and/or interpretable on a programmable system including at least one programmable processor. The programmable processor may be a special-purpose or general-purpose programmable processor for receiving data and instructions from a memory system, at least one input device and at least one output device and transmitting the data and instructions to the memory system, the at least one input device and the at least one output device.

Program codes for implementation of the method of the present disclosure may be written in any combination of one or more programming languages. These program codes may be provided for the processor or controller of a general-purpose computer, a special-purpose computer or another programmable data processing device to enable functions/operations specified in a flowchart and/or a block diagram to be implemented when the program codes are executed by the processor or controller. The program codes may all be executed on a machine; may be partially executed on a machine; may serve as a separate software package that is partially executed on a machine and partially executed on a remote machine; or may all be executed on a remote machine or a server.

In the context of the present disclosure, the machine-readable medium may be a tangible medium that contains or stores a program available for an instruction execution system, apparatus or device or a program used in conjunction with an instruction execution system, apparatus or device. The machine-readable medium may be a machine-readable signal medium or a machine-readable storage medium. The machine-readable medium may include, but is not limited to, an electronic, magnetic, optical, electromagnetic, infrared or semiconductor system, apparatus or device, or any appropriate combination thereof. Concrete examples of the machine-readable storage medium may include an electrical connection based on one or more wires, a portable computer disk, a hard disk, a random-access memory (RAM), a read-only memory (ROM), an erasable programmable read-only memory (EPROM) or a flash memory, an optical fiber, a portable compact disc read-only memory (CD-ROM), an optical storage device, a magnetic storage device, or any appropriate combination thereof.

In order that interaction with a user is provided, the systems and techniques described herein may be implemented on a computer. The computer has a display device (for example, a cathode-ray tube (CRT) or liquid-crystal display (LCD) monitor) for displaying information to the user; and a keyboard and a pointing device (for example, a mouse or a trackball) through which the user can provide input to the computer. Other types of devices may also be used for providing interaction with a user. For example, feedback provided for the user may be sensory feedback in any form (for example, visual feedback, auditory feedback or haptic feedback). Moreover, input from the user may be received in any form (including acoustic input, voice input or haptic input).

The systems and techniques described herein may be implemented in a computing system including a back-end component (for example, a data server), a computing system including a middleware component (for example, an application server), a computing system including a front-end component (for example, a client computer having a graphical user interface or a web browser through which a user can interact with implementations of the systems and techniques described herein) or a computing system including any combination of such back-end, middleware or front-end components. The components of the system may be interconnected by any form or medium of digital data communication (for example, a communication network). Examples of the communication network include a local area network (LAN), a wide area network (WAN), a blockchain network and the Internet.

The computing system may include clients and servers. A client and a server are generally remote from each other and typically interact through a communication network. The relationship between the client and the server arises by virtue of computer programs running on the respective computers and having a client-server relationship to each other. The server may be a cloud server, also referred to as a cloud computing server or a cloud host. As a host product in a cloud computing service system, the server solves the defects of difficult management and weak service scalability in a related physical host and a related virtual private servers (VPS) service.

In this embodiment of the present disclosure, vehicle interaction indication information triggered by an external vehicle-approaching object is acquired; interaction type recognition of the vehicle interaction indication information is performed so that an interaction type recognition result is obtained; and then in response to determining that the interaction type recognition result is a target interaction type, vehicle interaction information is sent to an associated vehicle user. In this manner, problems such as imperfection of an existing vehicle interaction function are solved so that the interaction function of a vehicle is enriched and usage scenarios of interaction of an intelligent vehicle are expanded.

Based on the previous embodiment, an embodiment of the present disclosure provides a vehicle. The vehicle includes a vehicle body and further includes the electronic device according to the previous embodiment, at least one vehicle radar disposed on the vehicle body, and a vehicle camera disposed outside the vehicle body. Alternatively, the vehicle may further include a voice collection module and an information display module disposed outside the vehicle body. In an embodiment, the information display module may be used for displaying text, voices, images, videos and other types of information.

It is to be understood that various forms of the preceding flows may be used, with steps reordered, added or removed. For example, the steps described in the present disclosure may be executed in parallel, in sequence or in a different order as long as the desired result of the scheme disclosed in the present disclosure is achieved. The execution sequence of these steps is not limited herein.

The scope of the present disclosure is not limited to the preceding embodiments. It is to be understood by those skilled in the art that various modifications, combinations, subcombinations and substitutions may be made depending on design requirements and other factors. Any modifications, equivalent substitutions, improvements and the like made within the principle of the present disclosure are within the scope of the present disclosure.

## Claims

1. A vehicle-based interaction method, comprising:
acquiring (S110, S230) vehicle interaction indication information triggered by an external vehicle-approaching object;
performing (S120, S240) interaction type recognition on the vehicle interaction indication information to obtain an interaction type recognition result; and
in response to determining that the interaction type recognition result is a target interaction type, sending (S130, S250) vehicle interaction information to an associated vehicle user.

2. The method of claim 1, further comprising:
acquiring (S210) external vehicle monitoring information collected by an external vehicle monitoring module; and
determining (S220) the external vehicle-approaching object according to the external vehicle monitoring information;
wherein the external vehicle monitoring module comprises at least one of a vehicle radar or a vehicle camera.

3. The method of claim 2, wherein acquiring (S210) the external vehicle monitoring information collected by the external vehicle monitoring module comprises at least one of:
acquiring first external vehicle monitoring information collected by the vehicle radar within a first preset range; or
acquiring second external vehicle monitoring information collected by the vehicle camera within a second preset range.

4. The method of claim 3, wherein acquiring the second external vehicle monitoring information collected by the vehicle camera within the second preset range comprises:
in response to determining that the external vehicle-approaching object is within the second preset range, collecting external object image data of the external vehicle-approaching object by the vehicle camera in real time, and acquiring the external object image data of the external vehicle-approaching object; and
in response to determining that the external vehicle-approaching object is within a vehicle interaction range, performing image recognition on the external object image data.

5. The method of any one of claims 1 to 4, wherein acquiring (S110, S230) the vehicle interaction indication information triggered by the external vehicle-approaching object comprises:
in response to determining that the external vehicle-approaching object is a first external vehicle-approaching object and that the first external vehicle-approaching object is within a vehicle interaction range, acquiring an approach vehicle distance of the first external vehicle-approaching object in real time; and
generating the vehicle interaction indication information according to the approach vehicle distance.

6. The method of any one of claims 1 to 4, wherein acquiring (S110, S230) the vehicle interaction indication information triggered by the external vehicle-approaching object comprises:
in response to determining that the external vehicle-approaching object is a second external vehicle-approaching object and that the second external vehicle-approaching object is within a vehicle interaction range, acquiring object interaction intent instruction information input by the second external vehicle-approaching object according to vehicle interaction guidance information; and
determining the object interaction intent instruction information to be the vehicle interaction indication information;
wherein the object interaction intent instruction information comprises at least one of gesture information or voice instruction information.

7. The method of any one of claims 1 to 6, wherein sending (S130, S250) the vehicle interaction information to the associated vehicle user comprises at least one of:
acquiring preset vehicle interaction information and sending the preset vehicle interaction information to the associated vehicle user; or
acquiring vehicle monitoring information, uploading the vehicle monitoring information to a cloud and sending the vehicle monitoring information to the associated vehicle user through the cloud;
wherein the vehicle monitoring information comprises at least one of internal vehicle monitoring information or external vehicle monitoring information.

8. The method of any one of claims 1 to 7, further comprising:
in response to determining, according to the interaction type recognition result, that the external vehicle-approaching object is a second external vehicle-approaching object, acquiring an object identity of the second external vehicle-approaching object;
receiving an interaction shielding instruction sent by the associated vehicle user according to the object identity; and
rejecting, according to the interaction shielding instruction, acquisition of vehicle interaction indication information triggered by the second external vehicle-approaching object.

9. A vehicle-based interaction apparatus (300), comprising:
a vehicle interaction indication information acquisition module (310) configured to acquire vehicle interaction indication information triggered by an external vehicle-approaching object;
an interaction type recognition result acquisition module (320) configured to perform interaction type recognition on the vehicle interaction indication information to obtain an interaction type recognition result; and
a vehicle interaction information sending module (330) configured to, in response to determining that the interaction type recognition result is a target interaction type, send vehicle interaction information to an associated vehicle user.

10. The apparatus (300) of claim 9, further comprising:
an external vehicle monitoring information acquisition module configured to acquire external vehicle monitoring information collected by an external vehicle monitoring module; and
an external vehicle-approaching object determination module configured to determine the external vehicle-approaching object according to the external vehicle monitoring information,
wherein the external vehicle monitoring module comprises at least one of a vehicle radar or a vehicle camera.

11. The apparatus (300) of claim 10, wherein the external vehicle monitoring information acquisition module is configured to:
acquire first external vehicle monitoring information collected by the vehicle radar within a first preset range; and/or
acquire second external vehicle monitoring information collected by the vehicle camera within a second preset range.

12. An electronic device, comprising:
at least one processor; and
a memory communicatively connected to the at least one processor, wherein
the memory stores instructions executable by the at least one processor to enable the at least one processor to perform the vehicle-based interaction method of any one of claims 1 to 8.

13. A non-transitory computer-readable storage medium storing computer instructions for causing a computer to perform the vehicle-based interaction method of any one of claims 1 to 8.

14. A computer program product, comprising a computer program which, when executed by a processor, causes the processor to perform the vehicle-based interaction method of any one of claims 1 to 8.

15. A vehicle, comprising a vehicle body, the electronic device of claim 12, at least one vehicle radar disposed on the vehicle body, and a vehicle camera disposed outside the vehicle body.
